# EUROPEAN PATENT APPLICATION

(11) **EP 4 606 510 A1**
(43) Date of publication of application: **27.08.2025**
(21) Application number: 23879602.3
(22) Date of filing: 03.10.2023
(51) Int. Cl.: B23K 26/14

(54) **NOZZLE FOR LASER PROCESSING, AND LASER PROCESSING DEVICE**

(30) Priority: 18.10.2022 JP 2022166848
(71) Applicant: Amada Co., Ltd., Isehara-shi, Kanagawa 259-1196 (JP)
(72) Inventor: MIZOGUCHI, Yuya, Isehara-shi, Kanagawa 259-1196 (JP); MOCHIZUKI, Tatsuya, Isehara-shi, Kanagawa 259-1196 (JP); KAWANA, Yusuke, Isehara-shi, Kanagawa 259-1196 (JP)
(74) Representative: Grünecker Patent- und Rechtsanwälte PartG mbB
(86) International application number: PCT/JP2023/036037
(87) International publication number: WO 2024/084955

(57) **Abstract**

An inner nozzle tip portion (6b) includes an inner nozzle opening (6b1) configured to emit a laser beam and eject a first assist gas. An outer nozzle (5) includes a stepped part (53) provided at an outer nozzle tip portion (5b) and recessed inward from the outer nozzle tip portion (5b), and an outer nozzle opening (5b1) open to the stepped part (53) to be a concentric circle with an inner nozzle opening (6b1), the outer nozzle opening (5b1) being configured to eject a second assist gas. The stepped part (53) includes a flat portion (53a) extending from a peripheral edge of the outer nozzle opening (5b1) in a direction orthogonal to a direction of an axis (A1), and the inner nozzle tip portion (6b) is located between the outer nozzle opening (5b1) and the outer nozzle tip portion (5b) in the direction of the axis (A1).

## Description

### TECHNICAL FIELD

The present disclosure relates to a laser processing nozzle and a laser processing machine.

### BACKGROUND ART

A laser processing machine that processes a workpiece by use of a laser beam is known. A processing head that irradiates the workpiece with a laser beam has a tip provided with a nozzle (laser processing nozzle), and the laser beam is emitted from a nozzle tip portion. In addition, assist gas is ejected from a tip of the nozzle to discharge metal molten by the laser beam from a kerf. For example, various laser processing nozzles are disclosed in Patent Literatures 1 to 4.

Furthermore, a double-structured nozzle including an inner nozzle and an outer nozzle provided to surround the inner nozzle is also known. A laser beam is emitted through an opening at a tip of an inner nozzle, along with a first assist gas being ejected. In addition, a second assist gas is ejected through an opening at a tip of the outer nozzle. The second assist gas ejected from the outer nozzle is ejected in an annular manner to surround the first assist gas ejected from the inner nozzle. The first assist gas is efficiently guided into the kerf by being rectified by the second assist gas.

### Citation List

### Patent Literature

Patent Literature 1: Japanese Patent Application Laid-Open Publication No. 1999-320172
Patent Literature 2: Japanese Patent Publication No. 5039050
Patent Literature 3: Japanese Patent Publication No. 5588189
Patent Literature 4: Japanese Patent Publication No. 6685478

### SUMMARY OF INVENTION

For example, when a hole, called a pierced hole, is made in a workpiece, metal molten by a laser beam may be ejected onto the upper surface of the workpiece, and as this metal cools and solidifies, it may accumulate in a lump of metal around the pierced hole. When the processing head moves from the pierced hole to an approach, or when the processing head moves along a cutting path in the vicinity of the pierced hole, the tip portion of the outer nozzle, located outside the inner nozzle, comes into contact with the accumulated lump of metal. If the tip portion of the outer nozzle is damaged by the contact, a flow of second assist gas ejected from the outer nozzle is disturbed.

In addition, if a laser beam passes through the accumulated lump of metal, the lump of metal may remelt and scatter as spatter. When the scattered spatter adheres to a gap between the inner nozzle and the outer nozzle, the flow of second assist gas ejected from the outer nozzle is disturbed. Moreover, the scattering of spatter is also a challenge in cutting a specific material such as a blast furnace material containing impurities on a metal surface.

In this way, in the double-structured nozzle, there is a problem that the flow of second assist gas ejected from the outer nozzle is disturbed, to weaken a rectifying effect on the first assist gas ejected from the inner nozzle.

A laser processing nozzle according to one aspect of a present embodiment includes a tubular inner nozzle extending in a direction of an axis, and a tubular outer nozzle provided to surround the inner nozzle and extending in the direction of the axis. The inner nozzle includes an inner nozzle opening provided in an inner nozzle tip portion in the direction of the axis, the inner nozzle opening being configured to emit a laser beam and eject a first assist gas through the inner nozzle opening. The outer nozzle includes an outer nozzle inner peripheral wall portion forming a flow path through which a second assist gas flows between the inner nozzle and the outer nozzle, a stepped part provided at an outer nozzle tip portion in the direction of the axis and recessed inward from the outer nozzle tip portion, and an outer nozzle opening open to the stepped part to be a concentric circle with the inner nozzle opening, the outer nozzle opening being configured to eject, through the outer nozzle opening, the second assist gas that has flowed through the flow path. The stepped part includes a flat portion extending from a peripheral edge of the outer nozzle opening in a direction orthogonal to the direction of the axis, and the inner nozzle tip portion is located between the outer nozzle opening and the outer nozzle tip portion in the direction of the axis.

The laser processing nozzle of one aspect of the present embodiment is capable of maintaining a shape of an edge of the outer nozzle opening. This can suppress disturbance of flow of second assist gas ejected through the outer nozzle opening.

According to one aspect of the present embodiment, a rectifying effect on the first assist gas ejected from the inner nozzle can be sufficiently exerted.

### BRIEF DESCRIPTION OF DRAWINGS

FIG. 1 is a cross-sectional view showing a main part of a laser processing nozzle according to a present embodiment.
FIG. 2 is a diagram showing a configuration of a laser processing machine according to the present embodiment.
FIG. 3 is a cross-sectional view showing the laser processing nozzle according to the present embodiment.
FIG. 4 is an explanatory view showing a flow of assist gas in a nozzle according to a comparative example.
FIG. 5 is an explanatory view showing a flow of assist gas in the nozzle according to the present embodiment.
FIG. 6 shows a relationship between a depth of a stepped part and a pressure difference.
FIG. 7 shows a relationship between the depth of the stepped part and an outlet pressure of an outer nozzle.
FIG. 8 is an explanatory view showing a structure of the stepped part.

### DESCRIPTION OF EMBODIMENTS

Hereinafter, with reference to the drawings, a laser processing nozzle and a laser processing machine according to a present embodiment will be described.

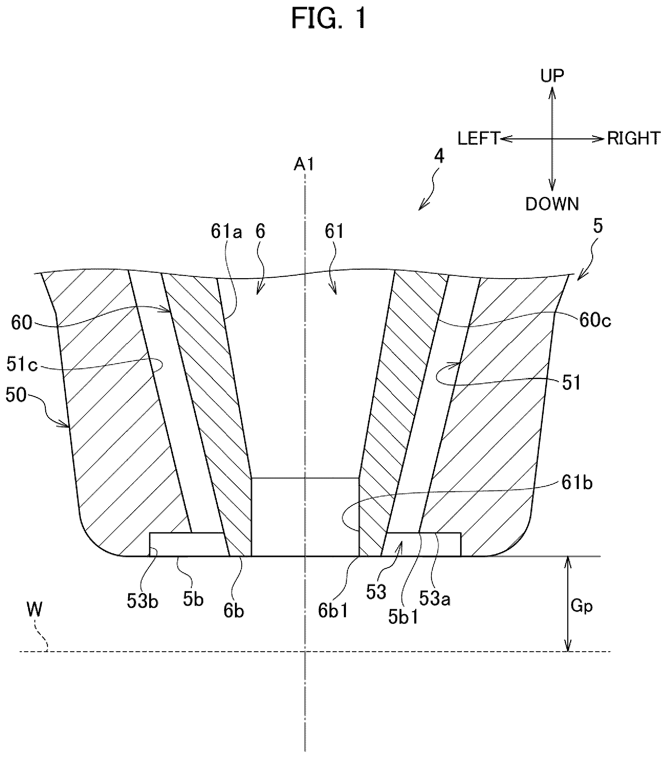

FIG. 1 is a cross-sectional view showing a main part of the laser processing nozzle according to the present embodiment. A laser processing nozzle 4 according to the present embodiment (hereinafter simply referred to as "the nozzle") includes a tubular inner nozzle 6 extending in a direction of an axis A1, and a tubular outer nozzle 5 provided to surround the inner nozzle 6 and extending in the direction of the axis A1. The inner nozzle 6 includes an inner nozzle opening 6b1 provided in an inner nozzle tip portion 6b in the direction of the axis A1 and configured to emit a laser beam and eject a first assist gas. The outer nozzle 5 includes an outer nozzle inner peripheral wall portion 51 forming a flow path through which a second assist gas flows between the inner nozzle 6 and the outer nozzle, a stepped part 53 provided at an outer nozzle tip portion 5b in the direction of the axis A1 and recessed inward from the outer nozzle tip portion 5b, and an outer nozzle opening 5b1 open to the stepped part 53 to be a concentric circle with the inner nozzle opening 6b1, the outer nozzle opening 5b1 being configured to eject the second assist gas that has flowed through the flow path. The stepped part 53 includes a flat portion 53a extending from a peripheral edge of the outer nozzle opening 5b1 in a direction orthogonal to the direction of the axis A1, and the inner nozzle tip portion 6b is located between the outer nozzle opening 5b1 and the outer nozzle tip portion 5b in the direction of the axis A1.

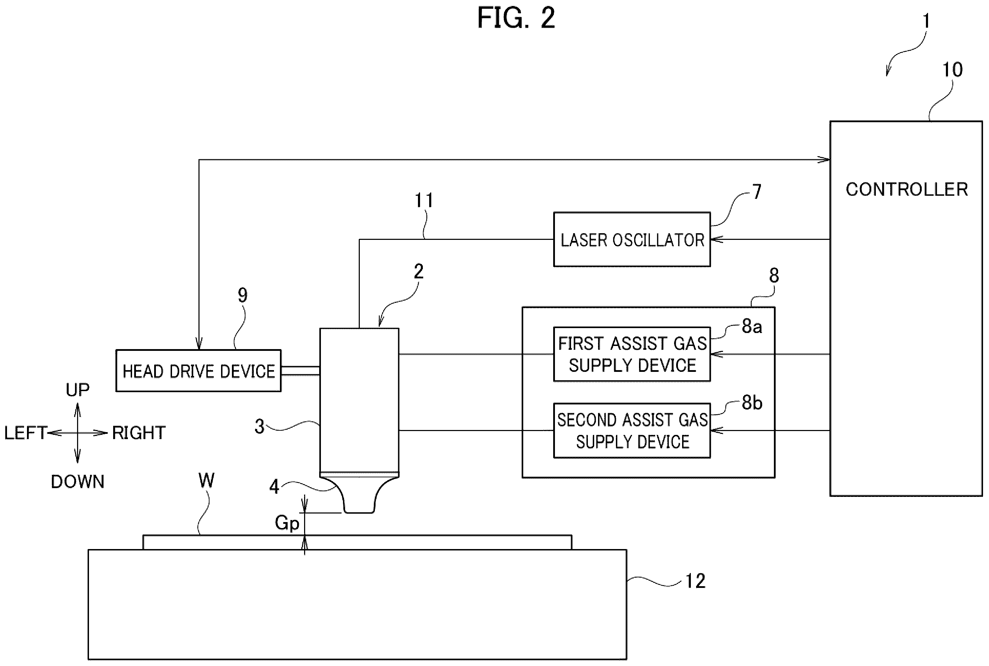

FIG. 2 is a diagram showing a configuration of the laser processing machine according to the present embodiment. Hereinafter, the configuration of a laser processing machine 1 will be described in detail. The laser processing machine 1 is a processing machine that performs laser processing by irradiating a workpiece W, such as sheet metal, with a laser beam. The laser processing machine 1 mainly includes a processing head 2, a laser oscillator 7, an assist gas supply device 8, a head drive device 9, and a controller 10.

The processing head 2 irradiates the workpiece W with a laser beam from above, to perform the laser processing on the workpiece W. The processing head 2 includes a head body 3 and the nozzle 4. The laser beam emitted from the laser oscillator 7 is supplied to the head body 3 via a process fiber 11. The head body 3 includes a collimator lens (not shown) that converts the laser beam emitted from an end face of the process fiber 11 into a substantially parallel laser beam, and a focusing lens (not shown) that focuses the substantially parallel laser beam emitted from the collimator lens.

The nozzle 4 is detachably attached to a tip of the head body 3. During the laser processing of the workpiece W, the laser beam is emitted from a tip portion of the nozzle 4, along with the assist gas being ejected.

The laser oscillator 7 generates a laser beam and supplies the laser beam to the processing head 2.

The assist gas supply device 8 supplies the assist gas to the processing head 2. The assist gas supply device 8 includes a first assist gas supply device 8a and a second assist gas supply device 8b.

The first assist gas supply device 8a supplies, to the processing head 2, the first assist gas to be ejected from the nozzle 4. The second assist gas supply device 8b supplies, to the processing head 2, the second assist gas to be ejected from the nozzle 4. In the present embodiment, the first assist gas is a different type of gas from the second assist gas. Specifically, the first assist gas is oxygen, and the second assist gas is air. In addition, the first assist gas and the second assist gas may be of the same type of gas, not limited to different types of gases.

The head drive device 9 moves the processing head 2 in three axial directions, including a left-right direction and a front-rear direction (direction perpendicular to a page space in FIG. 2), which are parallel to the workpiece W supported by a table 12, and an up-down direction, which is perpendicular to the workpiece W. The processing head 2 is driven via the head drive device 9 to move in the left-right direction and the front-rear direction. This allows the processing head 2 to move two-dimensionally on the workpiece W. Furthermore, the head drive device 9 drives and moves the processing head 2 in the up-down direction. This allows a gap Gp between the tip portion of the nozzle 4 and the workpiece W to be maintained at a required height during laser processing.

The controller 10 includes a computer including a hardware processor such as a central processing unit (CPU), a memory, and various interfaces. The memory and various interfaces are connected to the hardware processor via a bus. By executing program stored in the memory by the hardware processor, various functions provided by the controller 10 are achieved.

The controller 10 controls the laser oscillator 7, the assist gas supply device 8, and the head drive device 9 to perform the laser processing on the workpiece W. For example, the controller 10 controls the head drive device 9 to move the processing head 2 in the left-right and front-rear directions to cut out a product of a predetermined shape from the workpiece W. In addition, the controller 10 performs a tracking operation during the laser processing of the workpiece W. The tracking operation refers to an operation of moving the processing head 2 in the up-down direction so that the gap Gp between the workpiece W and the tip portion of the nozzle 4 keeps a predetermined tracking height.

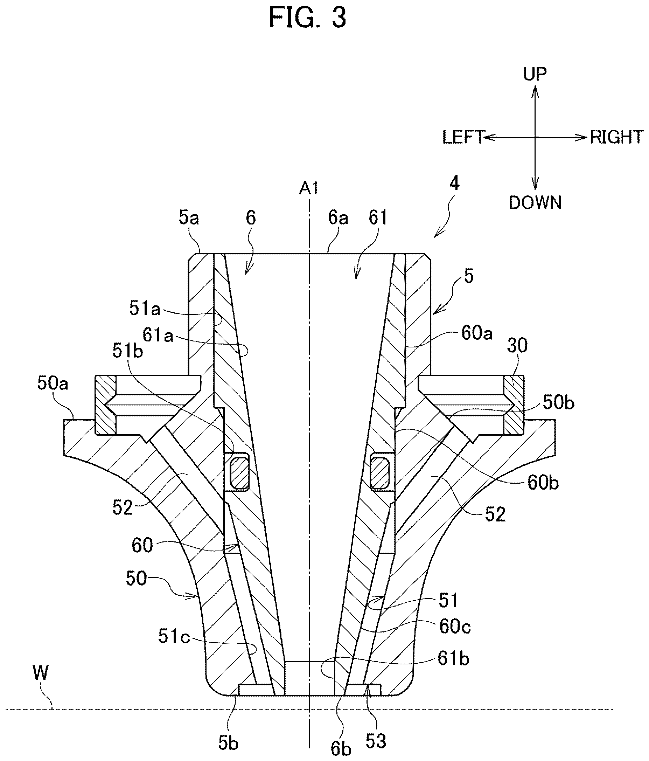

Next, with reference to FIGS. 1 and 3, the nozzle 4 will be described. FIG. 3 is a cross-sectional view showing a structure of the nozzle according to the present embodiment. The following description explains the structure of the nozzle 4, assuming a state of the nozzle 4 during the laser processing, that is, a state where the tip portion of the nozzle 4 faces the workpiece W placed horizontally.

As shown in FIG. 3, the nozzle 4 includes the outer nozzle 5 and the inner nozzle 6, and has a double structure in which the inner nozzle 6 is surrounded by the outer nozzle 5. The nozzle 4 is attached to the head body 3 (not shown in FIG. 3) via an annular collar 30.

The outer nozzle 5 is a tubular member that extends along the axis A1 corresponding to the up-down direction, from an outer nozzle base end 5a to an outer nozzle tip portion 5b.

The outer nozzle base end 5a is an end face located on a head body 3 side in the direction of the axis A1, corresponding to an upper end when viewed in the up-down direction. The outer nozzle tip portion 5b is an end face located on a workpiece W side in the direction of the axis A1, corresponding to a lower end when viewed in the up-down direction. The outer nozzle tip portion 5b has a flat shape that is parallel to the workpiece W.

The outer nozzle 5 includes an outer nozzle outer peripheral wall portion 50, the outer nozzle inner peripheral wall portion 51, multiple communication paths 52, and the stepped part 53.

The outer nozzle outer peripheral wall portion 50 forms an outer surface of the outer nozzle 5. In the center of the outer nozzle outer peripheral wall portion 50 in the direction of the axis A1, a flange 50a that protrudes outward radially from the axis A1 is provided.

The upper surface of the flange 50a includes an inclined surface 50b that approaches the axis A1 as being upward. The inclined surface 50b is provided in an annular shape along a circumferential direction around the axis A1.

A portion of the outer nozzle outer peripheral wall portion 50 that is below the flange 50a is formed such that an outer diameter decreases as being downward.

The outer nozzle inner peripheral wall portion 51 forms a hollow that penetrates an interior of the outer nozzle 5 along the axis A1. The outer nozzle inner peripheral wall portion 51 forms a space to accommodate the inner nozzle 6 and forms a flow path for the second assist gas to flow.

The outer nozzle inner peripheral wall portion 51 includes an upper region 51a, a middle region 51b, and a lower region 51c.

The upper region 51a is located in an upper part of the outer nozzle inner peripheral wall portion 51. The upper region 51a has the largest inner diameter at the outer nozzle inner peripheral wall portion 51 and extends along the axis A1 with the same inner diameter. The middle region 51b is located in the center of the outer nozzle inner peripheral wall portion 51. The middle region 51b has a smaller inner diameter than the upper region 51a and extends along the axis A1 with the same inner diameter. A stepped part is provided in a boundary between the upper region 51a and the middle region 51b to compensate for a difference in inner diameter.

The lower region 51c is located in a lower part of the outer nozzle inner peripheral wall portion 51. The lower region 51c is formed to have an inner diameter that decreases as being downward. The lower region 51c has an upper end connected to a lower end of the middle region 51b.

The multiple communication paths 52 are passages for guiding the second assist gas supplied from the second assist gas supply device 8b. The multiple communication paths 52 are provided at an equal pitch (an equal angle) along the circumferential direction around the axis A1. Each communication path 52 communicates linearly between the inclined surface 50b of the outer nozzle outer peripheral wall portion 50 and the outer nozzle inner peripheral wall portion 51.

The stepped part 53 is provided in the outer nozzle tip portion 5b. The stepped part 53 is recessed inward from the outer nozzle tip portion 5b, that is, toward the outer nozzle base end 5a.

As shown in FIG. 1, the stepped part 53 includes the flat portion 53a and a vertical wall portion 53b. The flat portion 53a extends outward from the outer nozzle opening 5b1, which will be described later, in a radial direction around the axis A1. The flat portion 53a extends parallel to the workpiece W, that is, in a direction orthogonal to the axis A1. However, the flat portion 53a does not need to be strictly parallel to the workpiece W and may be inclined within an acceptable range, such as manufacturing tolerance.

The vertical wall portion 53b rises from an outer peripheral edge of the flat portion 53a to approach the outer nozzle tip portion 5b, connecting to the outer nozzle tip portion 5b. In an example shown in FIG. 1, the vertical wall portion 53b rises parallel to the axis A1 from the outer peripheral edge of the flat portion 53a and extends linearly to the outer nozzle tip portion 5b.

The stepped part 53 forms a portion recessed toward the outer nozzle base end 5a at a constant depth in the outer nozzle tip portion 5b.

As shown in FIG. 3, the inner nozzle 6 is disposed coaxially with the outer nozzle 5 in the hollow formed by the outer nozzle inner peripheral wall portion 51. The inner nozzle 6 is a tubular member that extends along the axis A1 from an inner nozzle base end 6a to an inner nozzle tip portion 6b.

The inner nozzle base end 6a is an end face located on the processing head 2 side in the direction of the axis A1, corresponding to an upper end when viewed in the up-down direction. The inner nozzle tip portion 6b is an end face located on the workpiece W side in the direction of the axis A1, corresponding to a lower end when viewed in the up-down direction.

In the present embodiment, the inner nozzle tip portion 6b is set to be flush with the outer nozzle tip portion 5b. That is, a height from the workpiece W to the inner nozzle tip portion 6b matches a height from the workpiece W to the outer nozzle tip portion 5b.

The inner nozzle 6 includes an inner nozzle outer peripheral wall portion 60 and an inner nozzle inner peripheral wall portion 61.

The inner nozzle outer peripheral wall portion 60 forms an outer surface of the inner nozzle 6. The inner nozzle outer peripheral wall portion 60 generally corresponds to a shape of the outer nozzle inner peripheral wall portion 51 and includes an upper region 60a, a middle region 60b, and a lower region 60c.

The upper region 60a and the middle region 60b have outer diameters corresponding to inner diameters of the upper region 51a and the middle region 51b of the outer nozzle inner peripheral wall portion 51, so that the inner nozzle 6 fits with the outer nozzle inner peripheral wall portion 51. The upper region 60a and the middle region 60b of the inner nozzle outer peripheral wall portion 60 are closely in contact with the upper region 51a and the middle region 51b of the outer nozzle inner peripheral wall portion 51.

The lower region 60c is formed to have an outer diameter that decreases as being downward. A boundary between the middle region 60b and the lower region 60c in the inner nozzle outer peripheral wall portion 60 is offset above a boundary between the middle region 51b and the lower region 51c in the outer nozzle inner peripheral wall portion 51. Specifically, the boundary between the middle region 60b and the lower region 60c of the inner nozzle outer peripheral wall portion 60 is located above an opening of the communication path 52 exposed to the middle region 51b of the outer nozzle inner peripheral wall portion 51.

A gap is formed between the lower region 60c of the inner nozzle outer peripheral wall portion 60 and the outer nozzle inner peripheral wall portion 51. This gap forms a flow path for the second assist gas to flow between the inner nozzle outer peripheral wall portion 60 and the outer nozzle inner peripheral wall portion 51.

The inner nozzle inner peripheral wall portion 61 forms a hollow that penetrates an interior of the inner nozzle 6 along the axis A1. The inner nozzle inner peripheral wall portion 61 functions as a passage through which the laser beam and the first assist gas supplied from the first assist gas supply device 8a pass.

The inner nozzle inner peripheral wall portion 61 includes an upper region 61a and a lower region 61b.

The upper region 61a constitutes almost an entire region of the inner nozzle inner peripheral wall portion 61. The upper region 61a is formed to have an inner diameter that decreases as being downward.

The lower region 61b is located in a lower part of the inner nozzle inner peripheral wall portion 61. The lower region 61b is connected to a lower end of the upper region 61a and extends along the axis A1 with the same inner diameter.

As shown in FIG. 1, the inner nozzle tip portion 6b includes a tip portion of the inner nozzle inner peripheral wall portion 61 that opens as the inner nozzle opening 6b1. In addition, the stepped part 53 is provided at the outer nozzle tip portion 5b, and the stepped part 53 includes a tip portion of the outer nozzle inner peripheral wall portion 51 that opens as the outer nozzle opening 5b1. The outer nozzle opening 5b1 is opened to be concentric with the inner nozzle opening 6b1, forming an annular ejection port around the inner nozzle 6.

In the nozzle 4 including a structure like this, the first assist gas supplied from the first assist gas supply device 8a is supplied to a space formed by the inner nozzle inner peripheral wall portion 61. The first assist gas flowing through this space is ejected through the inner nozzle opening 6b1 toward the workpiece W.

In addition, the second assist gas supplied from the second assist gas supply device 8b is supplied to a gap between the outer nozzle inner peripheral wall portion 51 and the inner nozzle outer peripheral wall portion 60 through the communication path 52. The second assist gas flowing through this gap is ejected through the outer nozzle opening 5b1 to surround the first assist gas. At this time, the first assist gas is rectified by the second assist gas flowing around the first assist gas and is properly guided into the kerf of the workpiece W.

Furthermore, the inner nozzle tip portion 6b extends to a position where the inner nozzle tip portion is flush with the outer nozzle tip portion 5b. In other words, a distance between the inner nozzle opening 6b1, which ejects the first assist gas, and the workpiece W approaches to the same extent as a distance between the outer nozzle tip portion 5b and the workpiece W. As a result, the first assist gas ejected through the inner nozzle opening 6b1 can reach the kerf of the workpiece W in a state where a degree of mixing with the second assist gas flowing therearound is small, that is, in a state of high concentration.

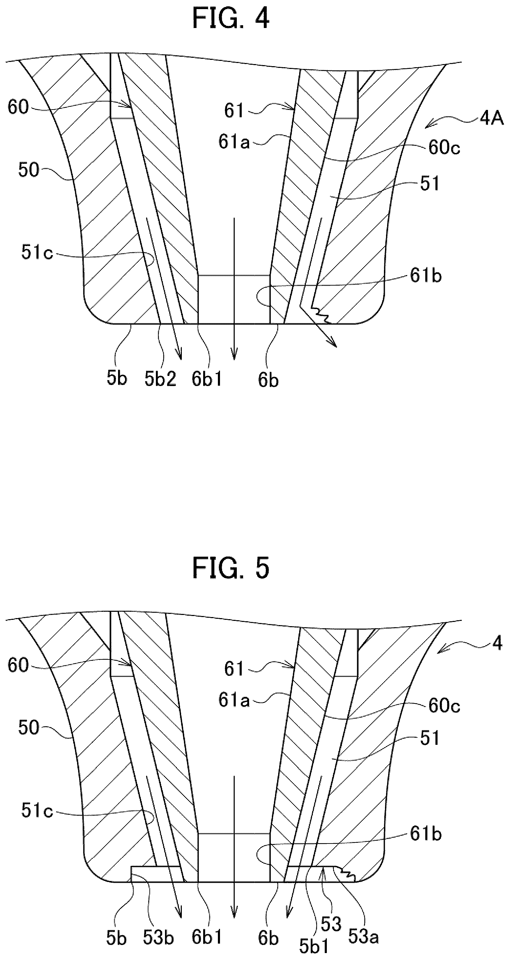

FIG. 4 is an explanatory view showing a flow of assist gas in a nozzle according to a comparative example. FIG. 5 is an explanatory view showing a flow of assist gas in the nozzle according to the present embodiment. A nozzle 4A shown in FIG. 4 has the same structure as the nozzle 4 shown in FIG. 5, except that the stepped part 53 is not provided.

In the nozzle 4A shown in FIG. 4, an outer nozzle opening 5b2 is opened in an outer nozzle tip portion 5b. If a lump of metal is accumulated around a pierced hole, the outer nozzle opening 5b2 may be damaged by the contact with the lump of metal when the processing head 2 moves from the pierced hole to an approach, or when the processing head 2 moves along a cutting path in the vicinity of the pierced hole. As shown in FIG. 4, when the outer nozzle opening 5b2 has an edge damaged, part of second assist gas flows along a damaged portion, and the flow of second assist gas deviates from a direction in which the second assist gas should originally flow, that is, from a direction along inclination of an inner nozzle outer peripheral wall portion 60. As a result, a rectifying effect of first assist gas is impaired.

In addition, when an accumulated lump of metal is irradiated with a laser beam, the lump of metal may remelt and scatter as spatter. In the nozzle 4A shown in FIG. 4, the outer nozzle opening 5b2 reaches a position where the outer nozzle opening is flush with the outer nozzle tip portion 5b. Consequently, a gap between an inner nozzle 6A and an outer nozzle 5A on a tip side of the nozzle 4 is small, and scattered spatter adheres to the gap, disturbing the flow of second assist gas ejected from the outer nozzle 5A.

In contrast, as shown in FIG. 5, according to the nozzle 4 of the present embodiment, the stepped part 53 is provided in the outer nozzle tip portion 5b. The outer nozzle opening 5b1, through which the second assist gas is ejected, is located at a position away from the outer nozzle tip portion 5b as viewed from the workpiece W. It is possible to avoid contact with the lump of metal that accumulates around the pierced hole with the outer nozzle opening 5b1. This allows for holding a shape of an edge of the outer nozzle opening 5b1 (the shape of a corner from the outer nozzle inner peripheral wall portion 51 to the flat portion 53a). Therefore, the flow of second assist gas is maintained along the outer nozzle inner peripheral wall portion 51, and hence a rectifying effect on the first assist gas ejected from the inner nozzle 6 can be sufficiently exerted.

In addition, the nozzle 4 shown in FIG. 5 includes the stepped part 53 at the outer nozzle tip portion 5b, and a large space is therefore around the outer nozzle opening 5b1. The spatter generated during processing scatters into the large space formed by the stepped part 53. This can reduce spatter that adheres to block the outer nozzle opening 5b1, and it is therefore possible to minimize influence on the flow of second assist gas.

If the lump of metal accumulates around the pierced hole, this lump of metal may collide with the vertical wall portion 53b of the stepped part 53, to damage the vertical wall portion 53b. However, the vertical wall portion 53b is spaced apart from the outer nozzle opening 5b1 via the flat portion 53a. This can reduce influence of damage on the vertical wall portion 53b on the second assist gas ejected through the outer nozzle opening 5b1.

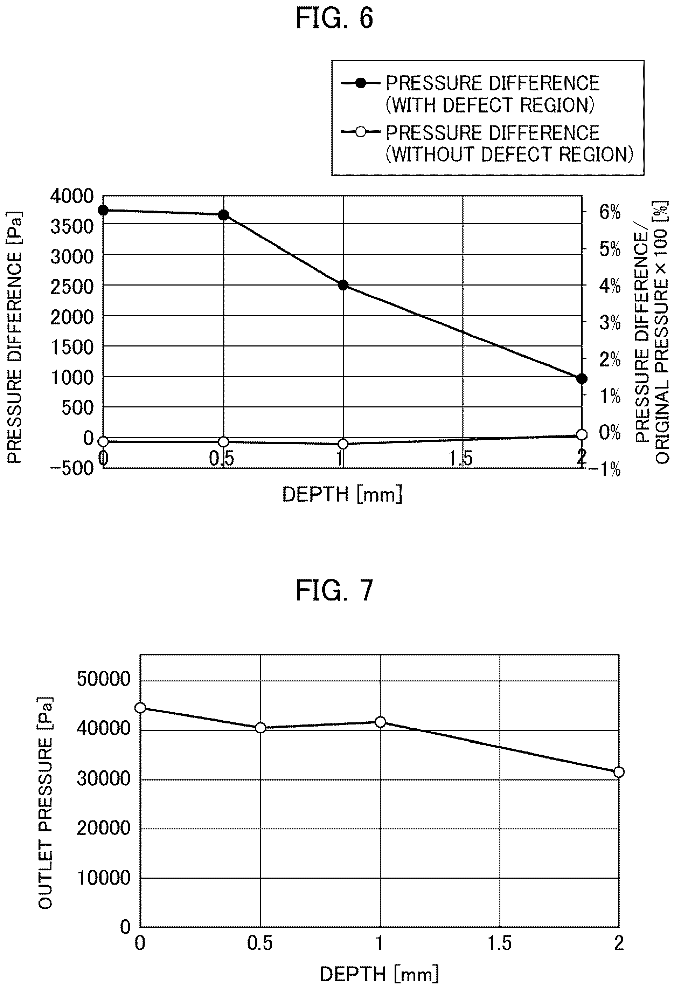

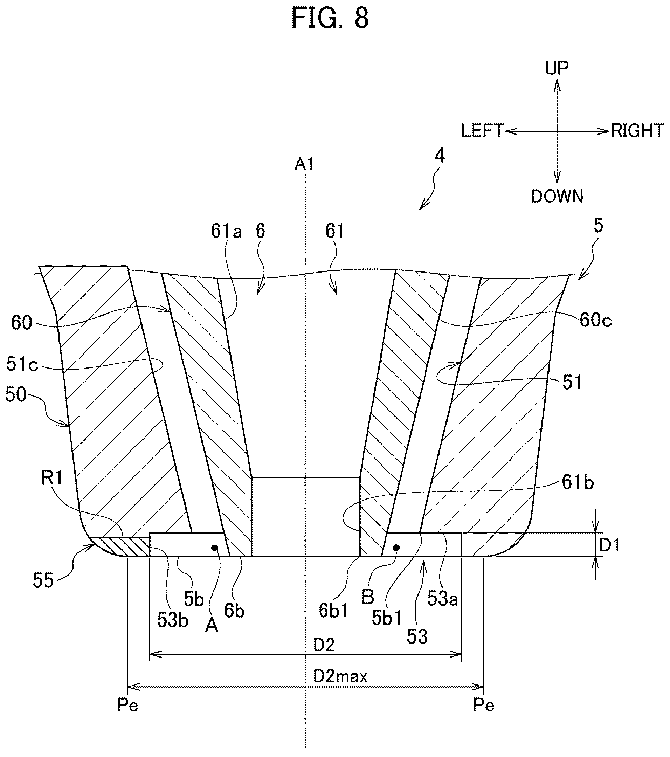

Hereinafter, the influence of the stepped part 53 on the second assist gas will be considered. FIG. 6 shows a relationship between a depth of the stepped part and a pressure difference. FIG. 7 shows a relationship between the depth of the stepped part and an outlet pressure of the outer nozzle. FIG. 8 is an explanatory view showing a structure of the stepped part.

As shown in FIG. 8, a defect region R1 was provided in a part of the outer nozzle tip portion 5b, and a gas pressure of second assist gas was evaluated. The defect region R1 is a groove with a width of 2 mm in a direction perpendicular to page space and a depth of 0.5 mm in an up-down direction. While changing a depth D1 of the stepped part 53, a pressure difference (B-A) of the second assist gas between a point A in the vicinity of the defect region R1 and an opposite point B via the axis A1 was measured. The gap Gp between the workpiece W (not shown in FIG. 8) and the outer nozzle tip portion 5b is 0.3 mm, and a command value (original pressure) of the second assist gas is 60 kPa.

As shown in FIG. 6, as the depth D1 of the stepped part 53 increases, the pressure difference between point A and point B decreases. By setting a sufficient depth D1 in the stepped part 53, occurrence of the pressure difference can be suppressed even if a defect occurs in the outer nozzle tip portion 5b. This allows the flow of second assist gas to be properly maintained, and hence a rectifying effect on the first assist gas ejected from the inner nozzle 6 can be exerted. In addition, FIG. 6 shows the relationship of the pressure difference in the case where there is no defect region R1 for reference.

As shown in FIG. 7, when the depth D1 exceeds 1 mm, the outlet pressure of the outer nozzle 5 decreases. However, the outlet pressure of the outer nozzle 5 can generally achieve a required outlet pressure regardless of the depth D1 of the stepped part 53.

Thus, as the depth D1 of the stepped part 53 increases, a volume of the space formed by the stepped part 53 increases, and a gas pressure stabilizing effect can be obtained. In addition, the flat portion 53a of the stepped part 53 extends parallel to the workpiece W. Consequently, as viewed in the radial direction around the axis A1, a distance between the flat portion 53a and the workpiece W is maintained to be constant. This can stabilize a gas pressure between the stepped part 53 and the workpiece W.

As shown in FIG. 8, a chamfered part 55 chamfered in a curved shape is provided at a corner at which the outer nozzle tip portion 5b connects to the outer nozzle outer peripheral wall portion 50. The vertical wall portion 53b of the stepped part 53 then connects to a flat region inward from a boundary Pe between the outer nozzle tip portion 5b and the chamfered part 55, that is, to a flat portion of the outer nozzle tip portion 5b. The larger a width (inner diameter) D2 of the stepped part 53 in the radial direction around the axis A1 is, the larger the volume of the space formed by the stepped part 53 becomes, which also increases the gas pressure stabilizing effect. The width D2 of the stepped part 53 reaches a maximum value D2max in the boundary Pe between the outer nozzle tip portion 5b and the chamfered part 55, and the volume of the space formed by the stepped part 53 is also maximized. Therefore, the vertical wall portion 53b of the stepped part 53 may be connected to the boundary Pe between the outer nozzle tip portion 5b and the chamfered part 55. Thus, a position of the vertical wall portion 53b can be arbitrarily set within a range that exhibits the gas pressure stabilizing effect, with the boundary Pe as an upper limit.

According to the present embodiment, since the shape of the edge of the outer nozzle opening 5b2 can be maintained, the flow of the second assist gas can be properly maintained. Consequently, a rectifying effect on the first assist gas ejected from the inner nozzle 6 can be exerted.

In the present embodiment, the stepped part 53 further includes the vertical wall portion 53b rising from the outer peripheral edge of the flat portion 53a to approach the outer nozzle tip portion 5b and connecting to the outer nozzle tip portion 5b.

According to this configuration, a periphery of the space formed by the stepped part 53 is surrounded by the vertical wall portion 53b, and hence it is possible to prevent the second assist gas from escaping outward in the radial direction. This can stabilize the gas pressure between the stepped part 53 and the workpiece W. In addition, due to presence of the vertical wall portion 53b, the inner nozzle tip portion 6b is surrounded by the outer nozzle tip portion 5b, and hence the inner nozzle tip portion 6b can be protected.

In addition, the laser processing machine 1 according to the present embodiment includes the processing head 2 to which the nozzle 4 described above is mounted, the laser oscillator 7 configured to supply a laser beam to the processing head 2, and the assist gas supply device 8 configured to supply the first assist gas and the second assist gas to the processing head 2.

According to this configuration, the second assist gas ejected from the inner nozzle 6 can be properly guided into the kerf. This allows for improvement of laser processing quality.

In the above-described embodiment, the inner nozzle tip portion 6b reaches the position where the inner nozzle tip portion is flush with the outer nozzle tip portion 5b. However, the inner nozzle tip portion 6b may be located between the outer nozzle opening 5b1 and the outer nozzle tip portion 5b in the direction of the axis A1. Consequently, the inner nozzle opening 6b1 can be set closer to the workpiece W than the outer nozzle opening 5b1 through which the second assist gas is ejected. This can guide the first assist gas of a required concentration into the kerf of the workpiece W. Furthermore, more preferably, the inner nozzle tip portion 6b is set to a position where the second assist gas is not mixed in the center (axis A1) of the first assist gas.

As described above, one aspect of the present embodiment has been described, but it should not be understood that the discussions and drawings that form part of this disclosure limit this invention. This disclosure will reveal various alternative forms of implementation, examples, and operational techniques to those skilled in the art.

The disclosure of this application relates to the subject matter described in Japanese Patent Application No. 2022-166848, filed with the Japan Patent Office on October 18, 2022, and all its disclosures are incorporated herein by reference.

## Claims

1. A laser processing nozzle, comprising:
a tubular inner nozzle extending in a direction of an axis; and
a tubular outer nozzle provided to surround the inner nozzle and extending in the direction of the axis,
the inner nozzle including an inner nozzle opening provided in an inner nozzle tip portion in the direction of the axis, the inner nozzle opening being configured to emit a laser beam and eject a first assist gas through the inner nozzle opening,
the outer nozzle including:
an outer nozzle inner peripheral wall portion forming a flow path through which a second assist gas flows between the inner nozzle and the outer nozzle;
a stepped part provided at an outer nozzle tip portion in the direction of the axis and recessed inward from the outer nozzle tip portion; and
an outer nozzle opening open to the stepped part to be a concentric circle with the inner nozzle opening, the outer nozzle opening being configured to eject, through the outer nozzle opening, the second assist gas that has flowed through the flow path,
the stepped part including a flat portion extending from a peripheral edge of the outer nozzle opening in a direction orthogonal to the direction of the axis,
the inner nozzle tip portion being located between the outer nozzle opening and the outer nozzle tip portion in the direction of the axis.

2. The laser processing nozzle according to claim 1, wherein the stepped part further includes a vertical wall portion rising from an outer peripheral edge of the flat portion to approach the outer nozzle tip portion and connecting to the outer nozzle tip portion.

3. The laser processing nozzle according to claim 2, wherein
a chamfered part chamfered in a curved shape is provided at a corner in which the outer nozzle tip portion connects to an outer nozzle outer peripheral wall portion, and
the vertical wall portion connects to a boundary between the outer nozzle tip portion and the chamfered part, or connects to a flat portion of the outer nozzle tip portion.

4. The laser processing nozzle according to claim 1, wherein the first assist gas is a different type of gas from the second assist gas.

5. A laser processing machine, comprising:
a processing head to which the laser processing nozzle according to any one of claims 1 to 4 is mounted;
a laser oscillator configured to supply the laser beam to the processing head; and
an assist gas supply device configured to supply the first assist gas and the second assist gas to the processing head.
